Europäisches Patentamt

European Patent Office

Office européen des brevets

(19)

(11) **EP 0 542 838 B1**

(12) **EUROPÄISCHE PATENTSCHRIFT**

(45) Veröffentlichungstag und Bekanntmachung des Hinweises auf die Patenterteilung:
**18.12.1996 Patentblatt 1996/51**

(21) Anmeldenummer: **91914464.2**

(22) Anmeldetag: **09.08.1991**

(51) Int. Cl.$^6$: **C01B 17/04**, B01D 53/52

(86) Internationale Anmeldenummer:
**PCT/EP91/01523**

(87) Internationale Veröffentlichungsnummer:
**WO 92/02449 (20.02.1992 Gazette 1992/05)**

(54) **VERFAHREN ZUR SCHWEFELRÜCKGEWINNUNG AUS EINEM H2S-HALTIGEN GASSTROM UNTER HOHEM DRUCK**

PROCESS FOR RECOVERING SULPHUR FROM A H2S-CONTAINING GAS STREAM UNDER HIGH PRESSURE

PROCEDE DE RECUPERATION DU SOUFRE CONTENU DANS UN COURANT DE GAZ CONTENANT DU H2S SOUS HAUTE PRESSION

(84) Benannte Vertragsstaaten:
**AT CH DE ES GB IT LI NL SE**

(30) Priorität: **10.08.1990 DE 4025471**

(43) Veröffentlichungstag der Anmeldung:
**26.05.1993 Patentblatt 1993/21**

(73) Patentinhaber: **Linde Aktiengesellschaft**
**65189 Wiesbaden (DE)**

(72) Erfinder:
• **HEISEL, Michael**
**D-8023 Pullach (DE)**
• **MAROLD, Freimut**
**D-8012 Ottobrunn (DE)**
• **GLASER, Jürgen**
**D-8190 Wolfratshausen (DE)**

(74) Vertreter: **Schaefer, Gerhard, Dr.**
**Linde Aktiengesellschaft**
**Zentrale Patentabteilung**
**82049 Höllriegelskreuth (DE)**

(56) Entgegenhaltungen:
EP-A- 0 030 447     EP-A- 0 215 317
DE-A- 3 208 695     DE-A- 3 428 452
DE-A- 3 429 979

## Beschreibung

Die Erfindung betrifft ein Verfahren zur Entfernung von $H_2S$ aus einem Gasstrom mit hohem Druck durch katalytische Direktoxidation des $H_2S$ ohne thermische Verbrennung zur Erzeugung von $SO_2$, wobei die katalytische Direktoxidation des $H_2S$ in mindestens einem über ein Kühlmedium indirekt innengekühlten Reaktor mit Katalysatorbett durchgeführt wird.

In zahlreichen Rohgasströmen ist Schwefel hauptsächlich in Form von $H_2S$ enthalten. Üblicherweise wird zur Schwefelentfernung bzw. Schwefelrückgewinnung ein solcher $H_2S$-haltiger, ggf. auch COS-haltiger Rohgasstrom einer physikalischen oder chemischen Wäsche unterzogen, wobei im Bedarfsfall noch eine Hydrolyse für das COS vorgeschaltet wird. Ein verfahren zu einer derartigen Schwefelentfernung beschreibt beispielsweise die DE-OS 30 47 830. Das Regeneriergas wird üblicherweise in einer Schwefelrückgewinnungsanlage, z.B. einer Clausanlage mit Hydrierung des Clausabgases, das dann vor die Wäsche zurückverdichtet wird, aufgearbeitet.

Aus der EP-A- 0 283 793 ist ein Verfahren bekannt, das eine katalytische Umsetzung von $H_2S$ mit $SO_2$ zu elementarem Schwefel in mehreren Reaktoren mit Katalysatorbetten unterhalb des Schwefelfestpunktes bzw. des Schwefeltaupunktes beschreibt. Über Mehrwegearmaturen wird der Gasstrom bei zyklischem Richtungswechsel über die Katalysatorbetten geleitet, um den durch Elementarschwefel desaktivierten Katalysator unter Wärmezufuhr regenerieren zu können. Als Reaktoren sind sowohl konventionelle Claus-Reaktoren als auch nicht adiabat betriebene Reaktoren verwendbar. Die Zyklenfahrweise bringt es dabei mit sich, daß alle Katalysatorbetten gleich zusammengesetzt und aufgebaut sein müssen.

Diese konventionellen Verfahren bedingen aber einen umfangreichen apparativen Aufwand, der mit erheblichen Kosten verbunden ist.

Bei vielen technisch relevanten Anwendungen fallen die $H_2S$-haltigen Rohgasströme als Gasströme mit hohem Druck an. So wird beispielsweise zur Energienutzung in GuD-Kraftwerken (Gas- und Dampfturbinen-Kraftwerk) Kohle zunächst bei Drücken zwischen ca. 20 und 70 bar vergast. Das entstehende Spaltgas wird durch eine Quenchung und evtl. durch eine zusätzliche Rußwäsche von Halogenen, deren Verbindungen, schweren Kohlenwasserstoffen, Ruß und Staub befreit. Das anfallende $H_2S$-haltige $H_2/CO$-Rohgasgemisch liegt als Gasstrom mit hohem Druck vor. Bevor das Gasgemisch in eine Gasturbine geleitet und dort verbrannt wird, muß es entschwefelt werden.

Weitere Beispiele für $H_2S$-haltige Druckgase stellen $H_2S$-haltiges Erdgas oder verdichtetes Biogas dar, die vor ihrer Weiterverarbeitung ebenfalls einer Entschwefelung unterzogen werden müssen.

Die Entschwefelung eines Gasstromes unter hohem Druck wird üblicherweise nach einem Verfahren durchgeführt, in welchem eine Wäsche eingesetzt wird.

Ein dagegen wie oben beschriebenes Verfahren mit mehreren zyklisch durchströmten bzw. durch Erwärmen zu regenerierenden Katalysatorbetten gilt im Zusammenhang mit Gasströmen unter hohem Druck als ungeeignet, da das zyklische Umschalten der Gasströme unter hohem Druck gerade wegen des hohen Druckes eine Vielzahl von Problemen mit sich bringt.

Aus der DE-A- 32 08 695 ist ein Verfahren zur katalytischen Oxidation von $H_2S$-haltigen Gasen durch direkte katalytische Oxidation des $H_2S$ zu elementarem Schwefel in einem Röhrenreaktor unter indirekter Abführung der Reaktionswärme mit einem Kühlmittel bei Drucken von 0,5 bis 10 bar, vorzugsweise 0,6 bis 5 bar, insbesondere 0,8 bis 2 bar, bekannt, wobei die Austrittstemperatur des Reaktionsgases aus dem Reaktor 180 bis 400°C beträgt. Die verwendeten Katalysatoren können Eisen, Kobalt, Nickel, Molybdän und/oder deren Sulfide oder Oxide enthalten. Die Katalysatoren können als solche oder auf einem Trägermaterial wie Aluminiumsilikate, Calciumaluminiumsilikate, Zeolithe und vorzugsweise Aluminiumoxid verwendet werden.

Aus der EP-A- 0 215 317 ist ein Verfahren zum Entfernen von $H_2S$ aus Abgasen durch Umsetzung mit $SO_2$ unter Bildung von Schwefel nach der Gleichung

$$2 \, H_2S + SO_2 \rightarrow 3 \, S + 2 \, H_2O$$

bekannt, wobei $H_2S$ vollständig in Elementarschwefel umgewandelt wird, der als Beladung auf dem Katalysator verbleibt.

Der Erfindung liegt die Aufgabe zugrunde, ein Verfahren aufzuzeigen, das auf einfache und damit kostengünstige Weise die Entschwefelung speziell eines Gasstromes unter hohem Druck von mindestens 5 bar ermöglicht.

Diese Aufgabe wird erfindungsgemäß dadurch gelöst, daß die katalytische Direktoxidation des $H_2S$ mit Sauerstoff unter einem Druck zwischen 20 und 70 bar besonders bevorzugt zwischen 30 und 50 bar, durchgeführt wird und die Temperatur im innengekühlten Reaktor zumindest in dem in Strömungsrichtung zuletzt durchströmten Teil des Katalysatorbettes unter dem Schwefeltaupunkt gehalten wird.

Unter Direktoxidation ist hierbei zu verstehen, daß keine thermische Verbrennung zur Erzeugung von $SO_2$ eingesetzt wird, sondern eine katalytische, wobei die gewünschten Reaktionen direkt ablaufen. Der zur Oxidation benötigte Sauerstoff wird dem Druckgasstrom vor dem Direktoxidations-Reaktor beispielsweise in Form von Luft, Rein-$O_2$ oder deren Mischungen mit $SO_2$ beigegeben.

Dieses erfindungsgemäße Verfahren bringt den wesentlichen Vorteil mit sich, daß der Gasstrom nicht wie nach dem erstgenannten Verfahren gemäß dem Stand der Technik zunächst für die Wäsche bis auf etwa Umgebungstemperatur abgekühlt werden muß und danach wieder, wie es etwa beim Anwendungsbeispiel eines GuD-Kraftwerkes erforderlich ist, für die Gasturbine aufgeheizt werden muß. Dabei bleibt bei diesem Verfahren nach dem Stand der Technik die Wärmeenergie, die in die Wasserkondensation geht, im wesentlichen ungenutzt. Das auskondensierte Wasser fehlt zusätzlich als Temperatur-dämpfender Gasbestandteil bei der Verbrennung in der Gasturbine.

Durch das erfindungsgemäße Verfahren wird insgesamt eine Erhöhung des Gesamtwirkungsgrades eines GuD-Kraftwerkes gegenüber einem Verfahren nach dem Stand der Technik erzielt, zumal die dort benützte Wäsche an sich schon einen erheblichen Energieverbrauch aufweist. Darüber hinaus tritt ein Gasverlust durch Koabsorption im erfindungsgemäßen Verfahren nicht mehr auf. Aber auch gegenüber einem wie oben beschriebenen Verfahren mit zyklisch durchströmten Katalysatorbetten ergibt sich im erfindungsgemäßen Verfahren eine bessere Energiebilanz, weil zumindest die Wärmeabgabe zur Katalysatorregeneration eingespart werden kann.

Erfindungsgemäß wird als Reaktor ein über ein Kühlmedium indirekt innengekühlter Reaktor mit Katalysatorbett eingesetzt. Das gewährleistet einen schnellen Ablauf der erwünschten Reaktionen im Reaktoreintrittsbereich, wo noch hohe Temperaturen herrschen, und gute Schwefelausbeute durch Gleichgewichtseinstellung bei den tieferen Temperaturen nahe dem Reaktoraustritt.

Erfindungsgemäß wird die Temperatur des innengekühlten Reaktors zumindest in dem in Strömungsrichtung zuletzt durchströmten Teil des Katalysatorbettes unter dem Schwefeltaupunkt gehalten. Die Kühlung dieses Reaktors kann bis nahe an den Wassertaupunkt betrieben werden. Als Kühlmittel sind alle in diesem Zusammenhang bekannten, insbesondere Wasser, einsetzbar.

Wie im Rahmen der Erfindung festgestellt wurde, wirkt der Schwefel, der teilweise am Katalysator bei Temperaturen unter dem Schwefeltaupunkt auskondensiert, unter dem erfindungsgemäß hohen Druck und bei diesen Temperaturen selbst katalytisch. Erfindungsgemäß wird der auskondensierte Produktschwefel im Verfahren bewußt mit dieser katalytischen Wirkung eingesetzt. Somit läßt sich das grundlegende Problem, daß der Schwefel die Katalysatorbetten zusetzt und damit den gewünschten Reaktionsablauf unterbricht, wirksam entschärfen. Unter den beschriebenen erfindungsgemäßen Bedingungen wirkt der Schwefel also selbst katalytisch und eine Desaktivierung des Katalysators durch auskondensierten Schwefel kann vermieden werden. Eine bislang notwendige Regenerierung des Reaktors von flüssigem Schwefel entfällt damit gänzlich. Ein Umschalten des Gasstromes im innengekühlten Reaktor zur Regeneration, wie es beim oben erwähnten konventionellen Verfahren notwendig ist, erübrigt sich dadurch ebenfalls, so daß das erfindungsgemäße Verfahren folglich nur eine wesentlich geringere Anzahl von Katalysatorbetten gegenüber konventionellen Verfahren erforderlich macht. Das bedeutet eine wesentliche Reduktion des apparativen Aufwandes, sowie eine Verbesserung der Verfügbarkeit und Zuverlässigkeit.

Vorteile ergeben sich bei der Benutzung von Katalysatoren, die selektiv $H_2S$ oxidieren, nicht aber $H_2$ und/oder CO. Dazu eignen sich besonders Katalysatoren, die auf $TiO_2$ als Trägermaterial aufgebaut sind, deshalb im wesentlichen aus $TiO_2$ bestehen und in Form von Schüttbetten vorliegen.

Wird im erfindungsgemäßen Verfahren dem gekühlten Reaktor ein weiterer, adiabat betriebener Reaktor ohne Innenkühlung vorgeschaltet, so können die Temperaturen vor dem adiabaten Reaktor besonders niedrig gehalten werden, da sie durch das Anspringen der Reaktionen (Oxidation des $H_2S$ und Claus-Reaktion) sehr schnell ansteigen. Das ermöglicht eine gute Gleichgewichtseinstellung und spart Heizenergie. Verunreinigungen vom Katalysatorbett können im Vergleich zum innengekühlten Reaktor relativ einfach wieder entfernt werden. Auch im ungekühlten, adiabat betriebenen Reaktor wird mit Vorzug ein Katalysator, der selektiv $H_2S$, nicht aber $H_2$ und/oder CO oxidiert und im wesentlichen aus $TiO_2$ besteht, benutzt. Der Katalysator kann in Form von Schüttbetten, aber auch von Waben vorliegen. Trotz dieser teilweise übereinstimmenden Eigenschaften wird in der Regel in den beiden Reaktortypen des erfindungsgemäßen Verfahrens, d.h. im ungekühlten, adiabat betriebenen und im innengekühlten, quasi isotherm betriebenen, ein unterschiedlicher, jeweils speziell geeigneter Katalysator eingesetzt.

Erfindungsgemäß wird die Temperatur des in Strömungsrichtung zweiten, innengekühlten Reaktors zumindest in dem in Strömungsrichtung zuletzt durchströmten Teil des Katalysatorbettes unter dem Schwefeltaupunkt gehalten. Die Kühlung dieses Reaktors kann bis nahe an den Wassertaupunkt betrieben werden. Als Kühlmittel sind alle in diesem Zusammenhang bekannten, insbesondere Wasser, einsetzbar.

Zur Minimierung der Verunreinigungen der Reaktoren wird im erfindungsgemäßen Verfahren der adiabat betriebene Reaktor vorzugsweise von unten nach oben durchströmt. Zunächst sammeln sich die mechanischen Verunreinigungen an der unteren Seite des Katalysatorbettes an und bilden dort eine Schicht, die dann aufgrund ihres Eigengewichtes bzw. der Gravitationswirkung zum Reaktorboden hinabfällt. Der Reaktorboden kann mit einem Bunker und Abzug für die abfallenden Verunreinigungen ausgestattet sein. Als Katalysator kann auch ein Wabenkatalysator eingesetzt werden, der gegen mechanische Verunreinigungen weniger empfindlich ist als Schüttbetten.

Mit besonderem Vorteil wird die Zuleitung für den Gasstrom an der Unterseite des adiabat betriebenen Reaktors dahingehend angebracht, beispielsweise durch eine seitliches Einleiten des Gasstromes am Reaktorboden, daß ein Verstopfen der Gasstromzuleitung ausgeschlossen werden kann.

Der innengekühlte Reaktor wird vorzugsweise von oben nach unten durchströmt, damit auskondensierter Schwefel mit dem Gasstrom aus diesem Reaktor ausgetragen werden kann. Eventuell eingetragener Staub wird im wesentlichen von auskondensiertem Schwefel aus dem innengekühlten Reaktor ausgespült. Bei stärkerer Verschmutzung des innengekühlten Reaktors kann dieser zusätzlich mit flüssigem Produktschwefel gespült werden. Der flüssige Produktschwefel nimmt dann die Verunreinigungen auf.

Flüssiger Schwefel wird vom Gas aus dem Reaktor gedrückt bzw. läuft ab. Spuren von Halogenen sind beim erfindungsgemäßen Verfahren tolerierbar. Der Schwefel wird in einem dem innengekühlten Reaktor nachgeschalteten Abscheider vom Druckgasstrom abgetrennt. Der Gasstrom kann zwischen innengekühltem Reaktor und dem Abscheider zusätzlich gekühlt werden, damit sichergestellt wird, daß eventuell noch im Gasstrom befindlicher Schwefeldampf auskondensiert.

Eine weitere Erhöhung der Schwefelrückgewinnungsrate ist im erfindungsgemäßen Verfahren folgendermaßen erreichbar:

Wird in Kauf genommen, daß die Verbesserung des Gesamtwirkungsgrades für das Anwendungsbeispiel des GuD-Kraftwerkes etwas geringer ausfällt, kann die Schwefelrückgewinnung vergrößert werden, indem die Temperatur im innengekühlten Reaktor weiter bis auf ca. 120-150°C abgesenkt wird. Da sich bei einer solchen Temperaturwahl im innengekühlten Reaktor das thermodynamische Gleichgewicht der Schwefelumsetzung nach der exothermen Reaktion

$$2H_2S + O_2 \rightarrow 2H_2O + 2/x \, S_x$$

zu einer höheren $H_2S$-Umsatzrate verschiebt, tritt damit eine Steigerung der Schwefelrückgewinnungsrate ein. Allerdings muß dabei vor Eintritt in den Reaktor Wasser auskondensiert werden, so daß der Verlust an Wärmeenergie, die in die Wasserkondensation geht, bei der Berechnung des Gesamtwirkungsgrades berücksichtigt werden muß.

Es ergaben sich besondere Vorteile, wenn, nachdem der Gasstrom die Direktoxidation in zumindest einem Reaktor durchlaufen hat, anschließend die in diesem Gasstrom enthaltenen restlichen Schwefelverbindungen und/oder Schwefeldämpfe zu $H_2S$ reduziert bzw. hydriert werden.

Die Gasentschwefelung läßt sich weiter verbessern, indem der aus dem zumindest einen Direktoxidations-Reaktor bzw. aus der daran anschließenden Reduktionsstufe austretende Gasstrom einer Adsorption, Chemisorption oder einer chemischen Wäsche, beispielsweise einer NaOH-Wäsche, vorzugsweise bei einer Temperatur über 125°C, der Schwefelverbindungen wie $H_2S$, $SO_2$, $COS$, $CS_2$, der Merkaptane, der Thiophene und/oder des Schwefeldampfes, vorzugsweise an ZnO, $Fe_2O_3$ oder imprägnierter Aktivkohle zugeführt wird.

Eine weitere Kostenersparnis bietet die Möglichkeit, im in Strömungsrichtung letzten Teil des Katalysatorbettes einen konventionellen Claus-Katalysator einzusetzten. Der erfindungsgemäß erreichte hohe Entschwefelungsgrad bzw. die Schwefelrückgewinnungsrate können dabei im wesentlichen gehalten werden.

Mit dem erfindungsgemäßen Verfahren läßt sich eine Schwefelrückgewinnungsrate von ca. 95 bis 99,9 % bei einem $H_2S$-Gehalt des Rohgases von 0,3 bis ca. 20 Vol.-% erreichen. Mit einer wie oben beschriebenen nachgeschalteten Reinigungsstufe ist die Schwefelentfernung aus dem Gasstrom sehr nahe an 100% heranzubringen. Durch die wesentliche Reduktion der benötigten Anlagenteile im Vergleich zu konventionellen Anlagen können im erfindungsgemäßen Verfahren zusätzlich zu den anfallenden Baukosten die Anforderungen an das Bedienungspersonal gesenkt werden. Gleichzeitig verringert sich die Störanfälligkeit der Anlage.

Das erfindungsgemäße Verfahren soll im folgenden anhand eines Ausführungsbeispiels für den Anwendungsfall des GuD-Kraftwerkes näher erläutert werden. Hierbei zeigt:

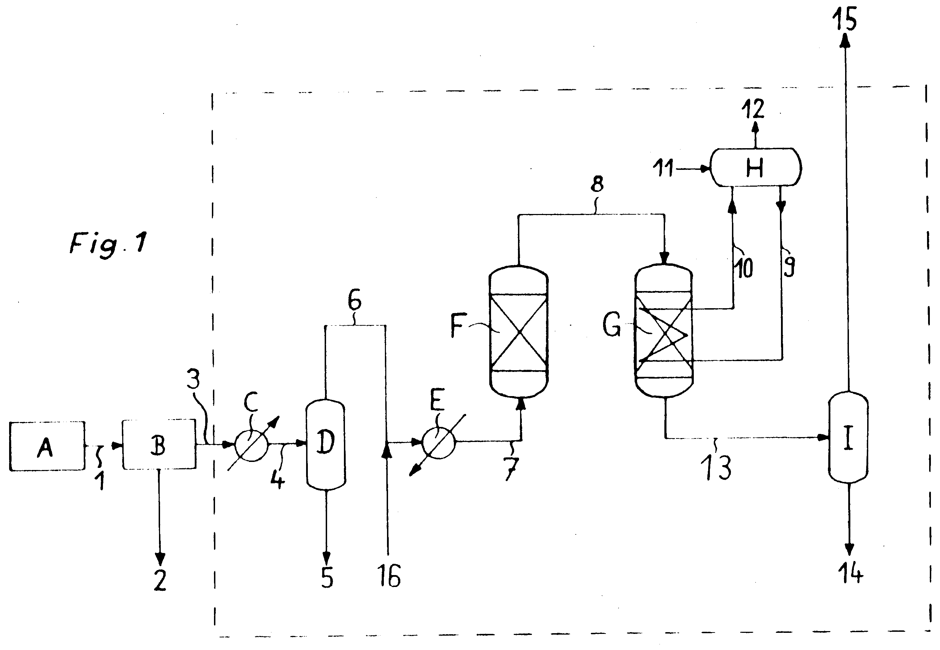

Fig.1 ein vereinfachtes Verfahrensschema für die erfindungsgemäße Entschwefelung des Hochdruckgases eines GuD-Kraftwerkes.

In A wird zunächst Kohle vergast. Das entstandene Gas wird über Leitung 1 einer Quenchung B zugeführt. Dort werden über Leitung 2 Halogene, deren Verbindungen, schwere Kohlenwasserstoffe, Ruß und Staub abgeschieden. Der so vorgereinigte Druckgasstrom passiert wassergesättigt unter einem Druck zwischen 20 und 70 bar und einer druckabhängigen Temperatur zwischen 160-230°C in Leitung 3 die Anlagengrenze zum Anlagenteil der Entschwefelung.

Dieser Anlagenteil ist in Fig. 1 durch eine gestrichelte Linie verdeutlicht. Um Wasserausfall auf dem Katalysator zu verhindern, wird das Gas im Wärmetauscher C auf ca. 100°C in Leitung 4 abgekühlt. Das im Abscheider D anfallende Prozeßwasser kann über Leitung 5 im Quench B verwendet werden, oder es wird zur Abwasserbehandlung geleitet.

Das Gas verläßt den Abscheider D über Leitung 6 und wird nach Zumischen von Luft über Leitung 16 im Wärmetauscher E, vorzugsweise mit Rohgas, auf ca. 130-200°C aufgeheizt, um ein zuverlässiges Anspringen der Reaktionen sicherzustellen. Über Leitung 7 wird es von unten in den adiabat betriebenen Reaktor F ohne Innenkühlung geführt, um eine vorzeitige Verschmutzung des Katalysators durch eventuell noch im Gasstrom befindlichen Ruß oder andere mechanische Verunreinigungen zu unterbinden. Durch den Ablauf der Clausreaktion bzw. die katalytische Direktoxidation des $H_2S$ wird das Gas im adiabat betriebenen Reaktor F, abhängig von der $H_2S$-Konzentration des Rohgasstromes, um ca. 10-50°C aufgeheizt.

Über Leitung 8 wird das Gas anschließend von oben in den innengekühlten Reaktor G geleitet, wo es weiter reagiert. In den vorzugsweise in Gegenstromrichtung gekühlten Reaktor G wird Wasser als Kühlmedium aus der Dampftrommel H über Leitung 9 geführt.

Über die Rückleitung 10 gelangt das teilweise verdampfte Wasser zurück zur Dampftrommel H. Eventuell benötigtes Speisewasser kann über Leitung 11 nachgeliefert werden. Aus dem Abscheider H steht bei 12 Wasserdampf zur Verfügung. Durch die Gegenstromkühlung stellt sich im unteren Bereich des Reaktors ein Gleichgewicht bei etwa der Kühltemperatur des Speisewassers aus Leitung 9 ein. Diese Temperatur wird unter dem Schwefeltaupunkt, vorzugsweise möglichst nahe an dem Wassertaupunkt im Gas, eingestellt. Bei dieser Temperaturwahl stellt sich ein maximaler Umsatz entsprechend der Clausreaktion ein. Abhängig vom Druck und der $H_2S$-Konzentration des Rohgasstromes liegt diese Temperatur bei ca. 100-130°C. Bei einer Temperatur von ca. 120°C ergibt sich so eine Schwefelausbeute von ca. 95-99,8 %, die im wesentlichen vom $H_2S$-Gehalt des Rohgases abhängt.

Auf dem Katalysator auskondensierter Schwefel desaktiviert den Katalysator jedoch nicht in unzulässigem Maße, da der Schwefel beim vorherrschenden hohen Druck selbst katalytisch aktiv ist. Indem der innengekühlte Reaktor G von oben nach unten durchströmt wird, kann auskondensierter Schwefel mit dem Gasstrom über Leitung 13 aus dem Reaktor G ausgetragen werden. Im Abscheider I wird schließlich der Produktschwefel über Leitung 14 vom Gasstrom abgetrennt. Der Gasstrom verläßt daraufhin diesen Anlagenteil und wird schließlich zur Turbine geleitet (15).

Mit dieser Anlage ist ein Beispiel für eine hochgradige Entschwefelung eines Hochdruckgasstomes eines GuD-Kraftwerkes bei einem gegenüber dem Stand der Technik wesentlich geringeren apparativen Aufwand und einer sehr hohen Schwefelrückgewinnungsrate aufgezeigt.

**Patentansprüche**

1. Verfahren zur Entfernung von $H_2S$ aus einem Gasstrom mit hohem Druck durch katalytische Direktoxidation des $H_2S$ ohne thermische Verbrennung zur Erzeugung von $SO_2$, wobei die katalytische Direktoxidation des $H_2S$ in mindestens einem über ein Kühlmedium indirekt innengekühlten Reaktor mit Katalysatorbett durchgeführt wird,
**dadurch gekennzeichnet**,
daß die katalytische Direktoxidation des $H_2S$ mit Sauerstoff unter einem Druck zwischen 20 und 70 bar, besonders bevorzugt zwischen 30 und 50 bar, durchgeführt wird und die Temperatur im innengekühlten Reaktor zumindest in dem in Strömungsrichtung zuletzt durchströmten Teil des Katalysatorbettes unter dem Schwefeltaupunkt gehalten wird.

2. Verfahren nach Anspruch 1, dadurch gekennzeichnet, daß ein Katalysator verwendet wird, der selektiv $H_2S$ oxidiert.

3. Verfahren nach einem der Ansprüche 1 oder 2, dadurch gekennzeichnet, daß der Katalysator im wesentlichen aus $TiO_2$ besteht.

4. Verfahren nach einem der Ansprüche 1 bis 3, dadurch gekennzeichnet, daß der in Strömungsrichtung letzte Teil des Katalysators aus einem konventionellen Claus-Katalysator besteht.

5. Verfahren nach einem der Ansprüche 1 bis 4, dadurch gekennzeichnet, daß dem innengekühlten Reaktor ein weiterer, adiabat betriebener Reaktor ohne Innenkühlung vorgeschaltet ist.

6. Verfahren nach Anspruch 1 oder 5, dadurch gekennzeichnet, daß in dem ungekühlten Reaktor ein Katalysator verwendet wird, der selektiv $H_2S$ oxidiert.

7. Verfahren nach einem der Ansprüche 5 oder 6, dadurch gekennzeichnet, daß der Katalysator des ungekühlten Reaktors im wesentlichen aus $TiO_2$ besteht.

8. Verfahren nach einem der Ansprüche 1 bis 7, dadurch gekennzeichnet, daß der in Strömungsrichtung erste Reaktor von unten nach oben, der in Strömungsrichtung zweite Reaktor von oben nach unten durchströmt wird.

9. Verfahren nach einem der Ansprüche 1 bis 8, dadurch gekennzeichnet, daß die im Gasstrom nach Durchlaufen von zumindest einem Direktoxidations-Reaktor enthaltenen restlichen Schwefelverbindungen und/oder Schwefeldämpfe zu $H_2S$ reduziert bzw. hydriert werden.

10. Verfahren nach einem der Ansprüche 1 bis 9, dadurch gekennzeichnet, daß der Gasstrom nach Durchlaufen von zumindest einem Direktoxidation-Reaktor oder der Reduktionsstufe einer Adsorption zur Entfernung des restlichen $H_2S$, anderer Schwefelverbindungen und/oder des Schwefeldampfes unterzogen wird.

11. Verfahren nach einem der Ansprüche 1 bis 9, dadurch gekennzeichnet, daß der Gasstrom nach Durchlaufen von zumindest einem Direktoxidations-Reaktors oder der Reduktionsstufe durch Chemisorption von restlichem $H_2S$, anderen Schwefelverbindungen und/oder Schwefeldampf befreit wird.

12. Verfahren nach Anspruch 11, dadurch gekennzeichnet, daß die Chemisorption an ZnO, $Fe_2O_3$ oder imprägnierter Aktivkohle durchgeführt wird.

13. Verfahren nach einem der Ansprüche 1 bis 9, dadurch gekennzeichnet, daß der Gasstrom nach Durchlaufen von zumindest einem Direktoxidations-Reaktor oder der Reduktionsstufe einer chemischen Wäsche zur Entfernung des restlichen H₂S, anderer Schwefelverbindungen und/oder des Schwefeldampfes unterzogen wird.

14. Verfahren nach Anspruch 13, dadurch gekennzeichnet, daß die chemische Wäsche aus einer NaOH-Wäsche besteht.

**Claims**

1. Process for removing H₂S from a gas stream at high pressure by catalytic direct oxidation of the H₂S without thermal combustion for the production of SO₂, the catalytic direct oxidation of the H₂S being carried out in at least one reactor which is internally cooled indirectly via a coolant medium and contains a catalyst bed,
   characterized in that
   the catalytic direct oxidation of the H₂S is carried out with oxygen under a pressure between 20 and 70 bar, particularly preferably between 30 and 50 bar, and the temperature in the internally cooled reactor is kept below the dew point of sulphur at least in the part of the catalyst bed through which the flow passes last in the direction of flow.

2. Process according to Claim 1, characterized in that a catalyst is used which selectively oxidizes H₂S.

3. Process according to one of Claims 1 or 2, characterized in that the catalyst essentially comprises TiO₂.

4. Process according to one of Claims 1 to 3, characterized in that the last part of the catalyst in the direction of flow comprises a conventional Claus catalyst.

5. Process according to one of Claims 1 to 4, characterized in that a further adiabatically operated reactor without internal cooling is connected upstream of the internally cooled reactor.

6. Process according to Claim 1 or 5, characterized in that a catalyst which selectively oxidizes H₂S is used in the uncooled reactor.

7. Process according to one of Claims 5 or 6, characterized in that the catalyst of the uncooled reactor essentially comprises TiO₂.

8. Process according to one of Claims 1 to 7, characterized in that the flow passes from bottom to top in the first reactor in the direction of flow, and the flow passes from top to bottom in the second reactor in the direction of flow.

9. Process according to one of Claims 1 to 8, characterized in that the residual sulphur compounds and/or sulphur vapours present in the gas stream after passage through at least one direct oxidation reactor are hydrogenated or reduced to H₂S.

10. Process according to one of Claims 1 to 9, characterized in that the gas stream, after passage through at least one direct oxidation reactor or the reduction stage, is subjected to an adsorption step to remove the residual H₂S, other sulphur compounds and/or the sulphur vapour.

11. Process according to one of Claims 1 to 9, characterized in that the gas stream, after passage through at least one direct oxidation reactor or the reduction stage, is freed from residual H₂S, other sulphur compounds and/or sulphur vapour by chemisorption.

12. Process according to Claim 11, characterized in that the chemisorption is carried out on ZnO, Fe₂O₃ or impregnated activated carbon.

13. Process according to one of Claims 1 to 9, characterized in that the gas stream, after passage through at least one direct oxidation reactor or the reduction stage, is subjected to chemical scrubbing to remove residual H₂S, other sulphur compounds and/or the sulphur vapour.

14. Process according to Claim 13, characterized in that the chemical scrubbing comprises NaOH scrubbing.

**Revendications**

1. Procédé d'élimination de H₂S d'un courant de gaz sous haute pression, par oxydation directe catalytique du H₂S, sans combustion thermique en vue de la production de SO₂, l'oxydation directe catalytique du H₂S étant effectuée dans au moins un réacteur refroidi de manière interne indirectement par l'intermédiaire d'un milieu réfrigérant avec lit de catalyseur,
   caractérisé en ce que
   l'oxydation directe catalytique du H₂S est effectuée à l'aide d'oxygène sous une pression comprise entre 20 et 70 bar, en particulier de préférence entre 30 et 50 bar, et en ce que la température dans le réacteur refroidi de manière interne est maintenue en dessous du point de rosée du soufre au moins dans la partie du lit de catalyseur traversée par le courant en dernier lieu dans le sens de l'écoulement.

2. Procédé selon la revendication 1, caractérisé en ce que l'on utilise un catalyseur qui oxyde sélectivement H₂S.

3. Procédé selon l'une quelconque des revendications 1 ou 2, caractérisé en ce que le catalyseur se compose essentiellement de $TiO_2$.

4. Procédé selon l'une quelconque des revendications 1 à 3, caractérisé en ce que la dernière partie du catalyseur dans le sens de l'écoulement se compose d'un catalyseur Claus classique.

5. Procédé selon l'une quelconque des revendications 1 à 4, caractérisé en ce que l'on intercale, avant le réacteur refroidi de manière interne, un réacteur supplémentaire, opérant de manière adiabatique, sans refroidissement interne.

6. Procédé selon la revendication 1 ou 5, caractérisé en ce que l'on utilise, dans le réacteur non refroidi, un catalyseur qui oxyde sélectivement $H_2S$.

7. Procédé selon l'une quelconque des revendications 5 ou 6, caractérisé en ce que le catalyseur du réacteur non refroidi se compose essentiellement de $TiO_2$.

8. Procédé selon l'une quelconque des revendications 1 à 7, caractérisé en ce que le premier réacteur dans le sens de l'écoulement est traversé par le courant d'en bas vers en haut, le deuxième réacteur dans le sens de l'écoulement étant traversé par le courant d'en haut vers en bas.

9. Procédé selon l'une quelconque des revendications 1 à 8, caractérisé en ce que les composés soufrés et/ou les vapeurs de soufre restants contenus dans le courant de gaz après traversée au moins d'un réacteur à oxydation directe sont réduits en $H_2S$, respectivement hydrogénés.

10. Procédé selon l'une quelconque des revendications 1 à 9, caractérisé en ce que le courant de gaz, après traversée au moins d'un réacteur à oxydation directe ou de l'étape de réduction, est soumis à une adsorption en vue de l'élimination du $H_2S$ restant, d'autres composés soufrés et/ou de la vapeur de soufre.

11. Procédé selon l'une quelconque des revendications 1 à 9, caractérisé en ce que le courant de gaz, après traversée au moins d'un réacteur à oxydation directe ou de l'étape de réduction, est débarrassé par chemisorption du $H_2S$ restant, d'autres composés soufrés et/ou de la vapeur de soufre.

12. Procédé selon la revendication 11, caractérisé en ce que la chemisorption est effectuée sur du ZnO, du $Fe_2O_3$, ou du charbon actif imprégné.

13. Procédé selon l'une quelconque des revendications 1 à 9, caractérisé en ce que le courant de gaz, après traversée d'au moins un réacteur à oxydation directe ou de l'étape de réduction, est soumis à un lessivage chimique en vue de l'élimination du $H_2S$ restant, d'autres composés soufrés et/ou de la vapeur de soufre.

14. Procédé selon la revendication 13, caractérisé en ce que la lessive chimique se compose d'une lessive à NaOH.

Fig. 1